# EUROPÄISCHE PATENTSCHRIFT

(11) **EP 3 871 798 B1**
(45) Veröffentlichungstag und Bekanntmachung des Hinweises auf die Patenterteilung: **08.11.2023**
(21) Anmeldenummer: 21159481.7
(22) Anmeldetag: 26.02.2021
(51) Int. Cl.: B09B 3/00, B30B 9/30, B30B 15/00, B09B 3/25

(54) **ANLAGE ZUM VERPRESSEN VON KUENSTLICHEN MINERALFASERABFAELLEN**
PLANT FOR COMPRESSING ARTIFICIAL MINERAL FIBRE WASTE
INSTALLATION DE COMPRESSION DE DÉCHETS DE FIBRES MINÉRALES ARTIFICIELLES

(30) Priorität: 28.02.2020 AT 501482020
(43) Veröffentlichungstag der Anmeldung: 01.09.2021
(73) Patentinhaber: Wiesbauer, Andreas, 3192 Hohenberg (AT)
(72) Erfinder: Wiesbauer, Andreas, 3192 Hohenberg (AT)
(74) Vertreter: Speringer, Markus

(56) Entgegenhaltungen:
- EP-A1- 3 168 037
- EP-A2- 1 362 647
- CN-A- 109 895 436
- DE-A1- 4 212 918
- DE-A1- 10 240 812
- JP-A- H09 300 348
- JP-A- 2008 093 589
- US-A1- 2009 118 563
- US-A1- 2009 118 566

## Beschreibung

### Technisches Gebiet

Die Erfindung betrifft eine Anlage zum Verpressen von künstlichen Mineralfaserabfällen zur sicheren und staubfreien Endlagerung in einer Deponie, wobei die Anlage folgende hintereinander angeordnete Vorrichtungen umfasst:
- eine Zufuhr-Fördereinrichtung für die künstlichen Mineralfaserabfälle mit einer Zufuhröffnung und mit einer Austrittsöffnung,
- eine an der Austrittsöffnung anschließende Hauptzerkleinerungsvorrichtung mit einem daran unmittelbar anschließenden Mischbereich und mit einer Zufuhröffnung für Zuschlagstoffe, wie z.B. Asche, sowie mit einer weiteren Zufuhröffnung für Wasser, wobei die Zufuhröffnungen im Mischbereich und/oder eingangsseitig der Hauptzerkleinerungsvorrichtung liegen,
- zumindest eine Schneckenpresse, welche das zerkleinerte und gemischte Material aus künstlichen Mineralfaserabfällen, Zuschlagstoffen und Wasser aus dem Mischbereich in einen Presskanal überführt und
- eine am Ende des Presskanals angeordnete Brechvorrichtung, welche das verpresste Material in ein Schüttgut mit definierter Korngröße zerkleinert.

### Stand der Technik

Bei künstlichen Mineralfasern (in weiterer Folge KMF) handelt es sich um synthetisch hergestellte, anorganische Fasern. Diese werden als Dämmmaterial eingesetzt (z.B. Glaswolle oder Steinwolle). Aufgrund der Faserdimension und der unzureichenden Biolöslichkeit können sich Mineralwollen bei einer Faserfreisetzung negativ auf die Gesundheit (Atemwege, Haut) auswirken. Sie sind bei Abbrucharbeiten als Problemstoffe zu sehen, welche separat gesammelt und in staubgeschützten geschlossenen Behältern (Big Bags) abtransportiert werden müssen. Damit das Material deponierfähig gemacht werden kann, muss es bei den Entsorgungsfirmen weiteren Bearbeitungsschritten unterzogen werden, welche im Allgemeinen energieaufwändig und damit kostenintensiv sind. Bei bekannten Verfahren werden die KMF-Abfälle beispielsweise mit unterschiedlichen Bindemitteln versetzt und verdichtet. Dabei gibt es Verfahren, bei denen die endgültige Bindung der KMF-Abfälle mit den Bindemitteln durch einen energieintensiven Heizprozess erfolgt. Bei manchen Verfahren kommen zusätzlich aufwändige Bindemittel zum Einsatz, welche den Prozess ebenfalls entsprechend verteuern.

Damit die KMF-Abfälle deponierfähig werden, muss sichergestellt werden, dass die physikalischen Eigenschaften derart bearbeitet wurden, dass einerseits keine Faserfreisetzung verursacht wird und andererseits ein vereinfachtes Handling hinsichtlich der Druckfestigkeiten und den damit einhergehenden Deponiestandsicherheiten gewährleistet werden kann. Darüber hinaus soll eine entsprechende Volumens-Reduktion zur Einspraung von Deponiekapazitäten sowie für einen kostengünstigeren Transport erreicht werden.

Die US 2009/118563 A1 zeigt eine Aufbereitungsanlage gemäss dem Oberbegriff des Anspruchs 1 für die Behandlung von mit Asbest belasteten Materialien. Hierzu wird das belastete Material zerkleinert, mit Zuschlagsstoffen für eine stromabwärtsgelegene Hitzebehandlung versehen, über einen Schneckenförderer transportiert und wieder aufgebrochen. Ein wesentliches Merkmal dieser Vorrichtung besteht darin, dass das Asbest zusammen mit den Zuschlagstoffen und der Hitzeeinwirkung chemisch umgewandelt werden soll. Die Vorrichtung sieht keine zusätzliche Verdichtung des Materials bei geringem Energieverbrauch vor, wodurch ein druckstabiles deponierfähiges Endprodukt erzeugt wird.

Die DE 4212918 A1 zeigt eine weitere Aufbereitungsanlage für mit Asbestfasern belastete Abfälle, bei der eine Reinigung und anschließende chemische Aufarbeitung der Waschflüssigkeit stattfindet. Die Anlage weist eine staubfreie Zufuhr auf. Die weiteren Schritte sind sehr energieintensiv.

### Kurzbeschreibung der Erfindung

Aufgabe der vorliegenden Erfindung ist es somit, die Anlage zur Behandlung der KMF-Abfälle möglichst einfach aufzubauen und mit geringem Energieeinsatz und einfach zu erhaltenden Zuschlagstoffen zu betreiben. Idealerweise umfasst die Anlage wenige vorwiegend mobile Module, sodass Sie schnell und kostengünstig an unterschiedlichen Standorten errichtet werden kann, wodurch Transportwege weiter reduziert werden.

Diese Aufgaben werden erfindungsgemäß mit einem Anlage gemäss Anspruch 1 gelöst.

Die gesamte Anlage kann aus größtenteils mobilen Modulen zusammengesetzt und vollautomatisch betrieben werden. Dabei nimmt die Zufuhr-Fördereinrichtung den meisten Raum ein. Hierbei handelt es sich um einen abgeschlossenen Raum mit einer verschließbaren Zufuhröffnung. Die in Big-Bags abgefüllten KMF-Abfälle werden hier in die Anlage eingegeben und über die Zufuhr-Fördereinrichtung in Richtung der Hauptzerkleinerungsvorrichtung bewegt. Diese schließt mit einer abgedichteten Haube direkt an die Austrittsöffnung der Zufuhr-Fördereinrichtung an und das eintretende Material wird hier zerteilt. In die Hauptzerkleinerungsvorrichtung werden sowohl Asche von einem Silo als auch Wasser eingeleitet und mit dem zerkleinerten KMF-Material vermengt. Eine Schneckenpresse übernimmt den entstandenen Brei und verdichtet diesen in Richtung des Presskanals. Damit das Material optimal verdichtet wird, ist der Schneckenpresse eine weitere hydraulische Presse nachgeordnet. Am Ende des Presskanals wird der entstandene Pressstrang durch eine Brechvorrichtung geleitet und in ein Schüttgut mit definierter Korngröße zerteilt. Durch die Bindung mittels der Asche und des Wassers entsteht dabei keine Staubbildung. Das entstandene Schüttgut kann zwischengelagert und anschließend problemlos deponiert werden, ohne dass es einer weiteren Behandlung bedarf. Ein weiteres bevorzugtes Merkmal ist es, dass anschließend der Brechvorrichtung eine Fördervorrichtung, wie z.B. ein Förderband, vorgesehen ist, welches eine Länge bzw. eine Fördergeschwindigkeit aufweist, die es erlaubt, dass das zu deponierende Schüttgut bis zum Ende der Fördervorrichtung weitgehend ausgehärtet ist. Ein entsprechend langes oder langsam laufendes Förderband ermöglicht es, dass das entstandene Schüttgut vollständig aushärtet und so unmittelbar in einen Container für den Weitertransport zur Deponie überführt werden kann. Ein aufwändiges Erhitzen oder Trocknen entfällt, wodurch die Anlage sehr energieeffizient ist.

Gemäß einer möglichen Ausführungsform der Erfindung ist es vorgesehen, dass die Zufuhr-Fördereinrichtung ein mobiler Schubboden mit einer verschließbaren Abdeckung an der Zufuhröffnung ist. Der mobile Schubboden hat eine staubdichte Abdeckung, welche bevorzugt über Funk betätigbar ist, um die KMF-Abfälle in die Anlage einzubringen. Innerhalb des Schubbodens können weitere Wasserbenebelungseinrichtungen vorgesehen sein, welche die KMF-Abfälle vor der Zerkleinerung weiter befeuchten.

Es ist ferner ein bevorzugtes Merkmal, dass die Hauptzerkleinerungsvorrichtung zwei Reißwellen umfasst, welche mit unterschiedlichen Geschwindigkeiten antreibbar sind, und dass der Mischbereich ein unterhalb der Reißwellen und oberhalb des Eingangsbereichs der Schneckenpresse angeordneter Schacht ist. Die beiden Reißwellen zerkleinern die auftreffenden in Big-Bags abgefüllten KMF-Abfälle, wobei ebenfalls eine Einspritzung von Wasser sowie eine Zufuhr von Asche als Bindemittel erfolgt. Das Wasser verhindert die Staubbildung und führt dazu, dass die Asche gemeinsam mit den KMF-Abfällen zu einem Brei vermengt wird, welcher anschließend von der Schneckenpresse übernommen wird.

Schließlich ist es ein weiteres bevorzugtes Merkmal, dass als Brechvorrichtung eine, vorzugsweise zwei Stachelwalzen vorgesehen sind, wobei die Stachelwalzen nur passiv durch das aus dem Presskanal austretende Material angetrieben sind. Durch die antriebslosen Stachelwalzen lässt sich der Pressstrang ohne Einsatz von zusätzlicher Energie problemlos auf die gewünschte Korngröße zerkleinern.

### Kurze Beschreibung der Zeichnungsfiguren

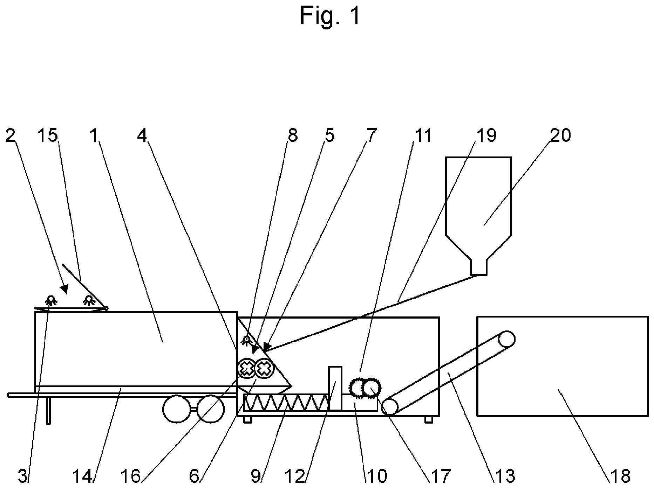

Die Erfindung wird nun in größerem Detail anhand eines Ausführungsbeispiels sowie mit Hilfe der beiliegenden Figur beschrieben. Dabei zeigt
Fig. 1 eine schematische Ansicht des Aufbaus einer erfindungsgemäßen Anlage.

### Beschreibung der Ausführungsarten

Bei der in der Fig. 1 schematisch dargestellten erfindungsgemäßen Anlage handelt es sich um eine semimobile Anlage zur physikalischen Bearbeitung von KMF-Abfällen, welche in Big-Bags oder in Containern per LKW oder per Bahn angeliefert werden.

Nach einer Eingangskontrolle und Verwiegung werden die KMF-Abfälle über eine Zufuhröffnung 2 in die Zufuhr-Fördereinrichtung 1 in Form eines mobilen Schubbodens eingebracht. Die Zufuhröffnung 2 verfügt über eine staubdichte Abdeckung 15, welche sich per Funk öffnen lässt. Wird die Abdeckung 15 geöffnet, erfolgt eine automatische Abschaltung der gesamten Anlage. Nur eine Wasserberieselung 3 arbeitet weiter, um auftretende Staubentwicklungen bzw. ungewollte Faserfreisetzungen zu verhindern. Wird die Abdeckung 15 nach dem Einbringen der KMF-Abfälle wieder geschlossen, startet die Anlage wieder automatisch.

Die KMF-Abfälle werden in einem Schubboden 14, der die Zufuhr-Fördereinrichtung 1 bildet, durch den "Walking-Floor" in Richtung Austrittsöffnung 4 transportiert und durchlaufen eine weitere Faserbindung durch ebenfalls im Schubboden eingerichtete Wasserbenebelungseinrichtungen. In der Hauptzerkleinerungsvorrichtung 5 angekommen, werden die KMF-Abfälle von zwei unterschiedlich schnell rotierenden Reißwellen 16 mit beispielsweise aufgeschweißten Hartmetallklingen zerkleinert. Das zerkleinerte Material fällt durch einen Schacht, welcher den Mischbereich 6 darstellt nach unten in Richtung des Eingangsbereichs einer Schneckenpresse 9. Die Schneckenpresse 9 fördert das Material in Richtung eines Presskanals 10. Gleichzeitig wird in den Mischbereich 6 und/oder oberhalb der Reißwellen 16 über eine Schnecke 19 Asche aus einem Silo 20 als Zuschlagstoff durch eine Zufuhröffnung 7 sowie Wasser über eine weitere Zufuhröffnung 8 eingebracht.

Durch einen gleichmäßigen Gegendruck werden die KMF vermahlen und als Faserbrei mit Asche und Wasser auf das bis zu 22-fache verdichtet. Das im Presskanal 10 befindliche Material wird mittels einer hydraulischen Presse 12 nachverdichtet. Am Ende des Presskanals 10 befindet sich eine Brechvorrichtung 11, die zwei Stachelwalzen 17 umfasst. Diese Stachelwalzen 17 zerteilen das verpresste Material in ein Schüttgut mit definierter Korngröße. Die Stachelwalzen 17 werden nur über das geschobene Material angetrieben und verfügen über keinen zusätzlichen Antrieb.

Anschließend wird das Material über eine langsam laufende Fördervorrichtung 13 in Form eines Förderbands in einen Container 18 befördert. Am Ende des Förderbands ist das Material aufgrund der Verhältnismischung von Wasser, Asche und KMF in einem entsprechend druckfesten Endzustand ausgehärtet. Die derart hergestellten "KMF-Briketts" können dann einer Baurestmassendeponie zur Endlagerung zugeführt werden.

Die gesamte erfindungsgemäße Anlage erzeugt keine Emissionen. Durch die Wasserberieselung bzw. -benebelung beim Befüllen und Zerkleinern kann auf eine Entstaubungsanlage verzichtet werden.

## Patentansprüche

1. Anlage zum Verpressen von künstlichen Mineralfaserabfällen zur sicheren und staubfreien Endlagerung in einer Deponie, wobei die Anlage folgende hintereinander angeordnete Vorrichtungen umfasst:
- eine Zufuhr-Fördereinrichtung (1) für die künstlichen Mineralfaserabfälle mit einer Zufuhröffnung (2) und mit einer Austrittsöffnung (4),
- eine an der Austrittsöffnung (4) anschließende Hauptzerkleinerungsvorrichtung (5) mit einem daran unmittelbar anschließenden Mischbereich (6) und mit einer Zufuhröffnung (7) für Zuschlagstoffe, wie z.B. Asche, sowie mit einer weiteren Zufuhröffnung (8) für Wasser, wobei die Zufuhröffnungen (7,8) im Mischbereich (6) und/oder eingangsseitig der Hauptzerkleinerungsvorrichtung (5) liegen,
- zumindest eine Schneckenpresse (9), welche das zerkleinerte und gemischte Material aus künstlichen Mineralfaserabfällen, Zuschlagstoffen und Wasser aus dem Mischbereich (6) in einen Presskanal (10) überführt und
- eine am Ende des Presskanals (10) angeordnete Brechvorrichtung (11), welche das verpresste Material in ein Schüttgut mit definierter Korngröße zerkleinert, **dadurch gekennzeichnet, dass** die Zufuhr-Fördereinrichtung (1) staubdicht ausgeführt und mit einer Wasserberieselung (3) ausgestattet ist, **und dass** nach der Schneckenpresse (9) im Presskanal (10) eine weitere hydraulische Presse (12) zum weiteren Verdichten des Materials vorgesehen ist.

2. Anlage zum Verpressen von künstlichen Mineralfaserabfällen nach Anspruch 1, **dadurch gekennzeichnet, dass** anschließend der Brechvorrichtung (11) eine Fördervorrichtung (13), wie z.B. ein Förderband, vorgesehen ist, welches eine Länge bzw. eine Fördergeschwindigkeit aufweist, die es erlaubt, dass das zu deponierende Schüttgut bis zum Ende der Fördervorrichtung (13) weitgehend ausgehärtet ist.

3. Anlage zum Verpressen von künstlichen Mineralfaserabfällen nach Anspruch 1 oder 2, **dadurch gekennzeichnet, dass** die Zufuhr-Fördereinrichtung (1) ein mobiler Schubboden (14) mit einer verschließbaren Abdeckung (15) an der Zufuhröffnung (2) ist.

4. Anlage zum Verpressen von künstlichen Mineralfaserabfällen nach einem der Ansprüche 1 bis 3, **dadurch gekennzeichnet, dass** die Hauptzerkleinerungsvorrichtung (5) zwei Reißwellen (16) umfasst, welche mit unterschiedlichen Geschwindigkeiten antreibbar sind, und dass der Mischbereich (6) ein unterhalb der Reißwellen (16) und oberhalb des Eingangsbereichs der Schneckenpresse (9) angeordneter Schacht ist.

5. Anlage zum Verpressen von künstlichen Mineralfaserabfällen nach einem der Ansprüche 1 bis 4, **dadurch gekennzeichnet, dass** als Brechvorrichtung (11) eine, vorzugsweise zwei Stachelwalzen (17) vorgesehen sind, wobei die Stachelwalzen (17) nur passiv durch das aus dem Presskanal (10) austretende Material angetrieben sind.

## Claims

1. A plant for pressing artificial mineral fibre waste for safe and dust-free final disposal in a landfill, wherein the plant comprises the following devices arranged behind each other:
- a supply conveying means (1) for the artificial mineral fibre waste having a supply opening (2) and an outlet opening (4),
- a main crushing device (5) adjoining the outlet opening (4) and having a mixing region (6) directly adjoining thereto and having a supply opening (7) for additives such as ash as well as having another supply opening (8) for water, wherein the supply openings (7, 8) are located in the mixing region (6) and/or at the input side of the main crushing device (5),
- at least one screw press (9) which transfers the crushed and mixed material of artificial mineral fibre waste, additives and water from the mixing region (6) into a pressing channel (10), and
- a breaking device (11) arranged at the end of the pressing channel (10) which is crushing the pressed material into a bulk material having a defined grain size, **characterised in that** the supply conveying means (1) is designed to be dustproof and is equipped with a water sprinkling system (3), and **in that** after the screw press (9) in the pressing channel (10) another hydraulic press (12) is provided for further compression of the material.

2. The plant for pressing artificial mineral fibre waste according to claim 1, **characterized in that** adjoining to the crushing device (11) a conveying device (13) such as a conveyor belt is provided, which has a length and a conveying speed, respectively, which allows the bulk material to be deposited being cured to a great extent at the end of the conveying device (13).

3. The plant for pressing artificial mineral fibre waste according to claim 1 or 2, **characterised in that** the supply conveying means (1) is a mobile moving floor (14) having a closable cover (15) at the supply opening (2) .

4. The plant for pressing artificial mineral fibre waste according to any of the claims 1 to 3, **characterised in that** the main crushing device (5) comprises two shredding shafts (16) which can be driven at different speeds, and **in that** the mixing region (6) is a duct arranged below the shredding shafts (16) and above the inlet area of the screw press (9).

5. The plant for pressing artificial mineral fibre waste according to any of claims 1 to 4, **characterised in that** one, preferably two, spiked rollers (17) are provided as the crushing device (11), wherein the spiked rollers (17) are driven only passively by the material escaping from the pressing channel (10).

## Revendications

1. Installation destinée au compactage de déchets de fibres minérales artificielles en vue de les mettre définitivement, d'une manière sûre et sans dégagement de poussières, en décharge, ladite installation comprenant les dispositifs suivants, mis en place les uns à la suite des autres :
- un organe de transport entrant (1) destiné auxdits déchets de fibres minérales artificielles, comportant une entrée (2) et une sortie (4),
- dans le prolongement de la sortie (4), un dispositif principal de broyage (5), suivi immédiatement d'une zone de mélange (6) et équipé d'une entrée (7) destinée à des additifs tels que, par exemple, des cendres, ainsi que d'une autre entrée (8) destinée à de l'eau, les entrées (7, 8) étant situées dans la zone de mélange (6) et/ou en amont du dispositif principal de broyage (5),
- au moins une presse à vis (9) qui transfère le matériau broyé et mélangé, à base de déchets de fibres minérales artificielles, d'additifs et d'eau, depuis la zone de mélange (6) dans un canal de compactage (10), et
- un dispositif de rupture (11), disposé à la fin du canal de compactage (10), qui réduit le matériau compacté en une matière meuble ayant une granulométrie définie, **caractérisée en ce que** l'organe de transport entrant (1) est réalisé de manière à être étanche à la poussière tout en étant équipé d'un organe d'arrosage à l'eau (3), **et qu**'en aval de la presse à vis (9), une autre presse hydraulique (12) est disposée dans le canal de compactage (10) pour davantage augmenter la densité dudit matériau.

2. Installation destinée au compactage de déchets de fibres minérales artificielles selon la revendication 1, **caractérisée en ce que,** dans le prolongement du dispositif de rupture (11), est prévu un dispositif de transport (13) tel que, par exemple, une bande transporteuse dont la longueur et/ou la vitesse de transport sont telles que la matière meuble à mettre en décharge puisse sensiblement achever son durcissement avant d'atteindre la fin du dispositif de transport (13).

3. Installation destinée au compactage de déchets de fibres minérales artificielles selon les revendication 1 ou 2, **caractérisée en ce que** l'organe de transport entrant (1) est un plancher mobile de poussée (14) comportant, au niveau de l'entrée (2), un élément de couverture (15) susceptible d'être fermé.

4. Installation destinée au compactage de déchets de fibres minérales artificielles selon l'une des revendications 1 à 3, **caractérisée en ce que** le dispositif principal de broyage (5) comprend deux arbres de déchirement (16) qui peuvent être entraînés à des vitesses différentes, et que la zone mélange (6) est un puits disposé en-dessous des arbres de déchirement (16) et en-dessus de la zone d'entrée de la presse à vis (9).

5. Installation destinée au compactage de déchets de fibres minérales artificielles selon les revendications 1 à 4, **caractérisée en ce qu'**elle comporte, en tant que dispositif de rupture (11), une et préférentiellement deux cylindres à pointes (17), les cylindres à pointes (17) n'étant sujets qu'à un entraînement passif par le matériau sortant du canal de compactage (10).
